# EUROPEAN PATENT APPLICATION

(11) **EP 1 435 506 A1**
(43) Date of publication of application: **07.07.2004**
(21) Application number: 03258114.2
(22) Date of filing: 22.12.2003
(51) Int. Cl.: G01B 11/00

(54) **Optically triggered probe**

(30) Priority: 30.12.2002 US 334017
(71) Applicant: UNITED TECHNOLOGIES CORPORATION, Hartford, CT 06101 (US)
(72) Inventor: Banks, Anton G., New Britain, CT 06051 (US)
(74) Representative: Leckey, David H.

(57) **Abstract**

An optically triggered probe (10) comprises a probe body (15) comprising a light source (17) adapted to emit a laser beam, a signal receiver (19) adapted to receive the light beam, and a pivotable interface (13), and a probe tip (11) comprising a first end (16) connected to the probe body (15) via the pivotable interface (13), a second end (14) adapted to be displaced from a neutral position, and a means (27) for reflecting the light beam attached to the first end (16) adapted to reflect the emitted light beam to the signal receiver (17).

## Description

### BACKGROUND OF THE INVENTION

### Field of the Invention

The present invention relates to an optically triggered probe. More particularly, the present invention relates to a probe adapted to accurately discern and measure the deflection of a probe tip in contact with a surface through the incorporation of optical means.

### Description of Related Art

It is common practice to use probing in several areas of manufacturing to verify part dimensions in order to reduce the lead time caused by Coordinate Measurement Machine (CMM) backlog and part travel. Typical of the probes used to perform such operations are probes having a tip that is held in its neutral position by numerous centering springs, typically three or four springs, depending on the make and model.

The tip of the probe is connected to at least three physical switches distributed in equal distances around the probe tip. These switches require a certain amount of force to be tripped and register displacement indicative of contact. The combination of the centering springs and force requiring to activate the switches creates a "lobing" effect. By "lobing" it is meant that probing in certain directions requires more force than in other directions to be tripped. In addition to requiring unequal forces to produce the same displacement of the probe tip in differing directions, such lobing additionally renders it more difficult to accurately ascertain the direction and degree of displacement of the probe tip.

What is therefore needed is a probe constructed to experience a minimal amount of "lobing" and which allows for accurate readings of probe tip displacement.

### SUMMARY OF THE INVENTION

Accordingly, it is an object of the present invention to provide a probe adapted to accurately discern and measure the deflection of a probe tip in contact with a surface through the incorporation of optical means.

In accordance with one aspect of the the present invention, an optically triggered probe comprises a probe body comprising a light source adapted to emit a light beam, a signal receiver adapted to receive the light beam, and a pivotable interface, and a probe tip comprising a first end connected to the probe body via the pivotable interface, a second end adapted to be displaced from a neutral position, and a means for reflecting the light beam attached to the first end adapted to reflect the emitted light beam to the signal receiver.

In accordance with a further aspect of the present invention, a method of optically triggering a probe comprises the steps of positioning a probe in proximity to a surface, the probe comprising a light source adapted to emit a light beam, a signal receiver adapted to receive the light beam, and a pivotable interface, and a probe tip comprising a first end connected to the probe body via the pivotable interface a second end adapted to be displaced from a neutral position, and a means for reflecting said light beam attached to the first end adapted to reflect the emitted laser beam to the signal receiver, centering the probe tip along said neutral position, emitting the light beam from the light source, reflecting the light beam off of the means for reflecting said light beam, receiving the reflected light beam with the signal receiver and producing a signal indicative of an intensity of the reflected light beam, moving the probe tip into contact with the surface, and analyzing the signal to determine contact between the probe top and the surface.

### BRIEF DESCRIPTION OF THE DRAWINGS

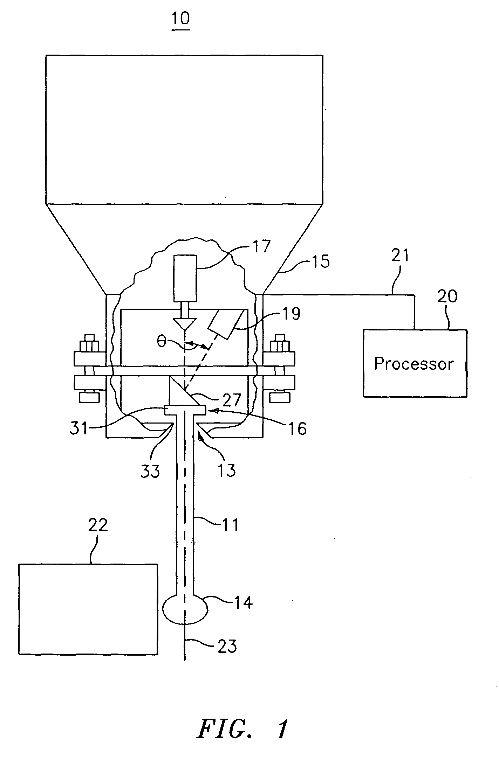

The Figure is a schematic representation of the optically triggered probe of the present invention.

### DETAILED DESCRIPTION OF THE PREFERRED EMBODIMENT(S)

There is herein described the optically triggered probe of the present invention constructed to exhibit a minimal amount of "lobing" and which provides accurate measurements of the displacement of the probe tip.

Optical probe 10 is comprised of a probe tip 11 attached via a pivotable interface 13 to probe body 15. Probe tip 11 has two ends. A first end 14 is configured to engage in contact with surfaces 22 external to the optical probe 10 sufficient to deflect the first end 14 of the probe tip 11 relative to a center line 23. Center line 23 represents the non-deflected, centered position of the probe tip assumed in the absence of contact with a surface 22. Attached to a second end 16 of the probe tip 11 is a reflective surface 27. Second end 16 comprises a platform 31 to which is attached reflective surface 27. Platform 31 is wider than opening 33 through which probe tip 11 is inserted. As a result, the probe tip 11 is prevented from sliding through opening 33 and detaching from pivotable interface 13.

Housed internally within probe body 15 at fixed positions are light source 17 and signal receiver 19. Signal receiver 19 is configured to receive an optical signal generated by light emitted by light source 17 and reflected off of reflective surface 27 at an angle theta. In a preferred embodiment, the emitted light comprises laser light. In a preferred embodiment, reflective surface 27 comprises a mirror. By mounting a reflective surface 27 to an end 16 of the probe tip 11 and a light source 17 and signal receiver 19 to the base of the probe body 15, the signal generated by the light source 17 is utilized as an optical switch.

When the probe tip 11 is in its neutral or zeroed position, preferably along center line 23, the laser beam generated by light source 17 reflects off the reflective surface 27 mounted to the second end 16 of probe tip 11 and into the signal receiver 19 signaling that no contact with a surface 22 has taken place. When the probe tip 11 hits an object, the angle theta at which the laser beam is reflected changes and thus prevents the light beam signal from being optimally directed to the signal receiver 19. When the light beam signal falls below a predetermined threshold intensity, a status switch may be activated indicative of probe tip 11 contact with a surface 22.

In a preferred embodiment, the intensity of the reflected light beam recorded by signal receiver 19 is transmitted by communication link 21 to a processor 20. In addition to registering the change in status attendant to the probe tip 11 coming in contact with a surface 22, processor 20 can perform analysis to ascertain additional information regarding the nature of the contact.

For example, once contact is established between the probe tip 11 and a surface 22, the processor 20 can measure and record the position of optical probe 10 and thus calculate the position of the surface 22. In a preferred embodiment, signal receiver 19 receives and measures the intensity of the reflected laser beam. Processor 20 can then continually compare the intensity of the reflected laser beam to the previously measured intensity of the laser beam when the probe tip 11 was zeroed in the neutral position, and determine any loss of intensity in the light beam. By so measuring and comparing the incoming, reflected light beam, processor 20 can not only determine contact with a surface 22, but can correlate the loss in intensity of the laser beam to the change in theta, and therefore the amount of deflection of the probe tip 11 and better compute the true position of the surface 22.

In a preferred embodiment, a grid is etched into the reflective surface 27. As the reflective surface 27 is deflected in response to the probe tip 11 coming in contact with a surface 22, the light beam reflects off of the reflective surface 27 and the grid, at predefined distances. Reflecting off the grid causes a diminution in the intensity of the light beam received by the signal receiver 19. As a result, processor 20 can accurately determine the deflection of the probe tip 11.

## Claims

1. An optically triggered probe (10) comprising:
a probe body (15) comprising:
a light source (17) adapted to emit a light beam;
a signal receiver (19) adapted to receive said light beam; and
a pivotable interface (13); and
a probe tip (11) comprising:
a first end (16) connected to said probe body (15) via said pivotable interface (13);
a second end (14) adapted to be displaced from a neutral position; and
a means (27) for reflecting said light beam attached to said first end (16) adapted to reflect said emitted light beam to said signal receiver (19).

2. The optically triggered probe of claim 1 wherein said light beam comprises a laser beam.

3. The optically triggered probe of claim 1 or 2, additionally comprising a processor (20) adapted to receive a signal from said signal receiver (19) via a communication link wherein said processor (20) computes a displacement of said second end (14) from said neutral position.

4. The optically triggered probe of any preceding claim, wherein said means for reflecting said light beam comprises a surface (27) with a grid thereupon.

5. The optically triggered probe of any preceding claim, wherein said means for reflecting said light beam comprises a mirror (27).

6. The optically triggered probe of any preceding claim, wherein said receiver (19) comprises a means for measuring an intensity of said light beam.

7. The optically triggered probe of any preceding claim, wherein said first end (16) comprises a platform (31) to which is attached said means (27) for reflecting said light beam.

8. The optically triggered probe of claim 7, wherein said platform (31) is wider than an opening through which said first end (16) of said probe tip (11) is inserted into said probe body (15).

9. A method of optically triggering a probe comprising the steps of:
positioning a probe (10) in proximity to a surface (22) said probe comprising:
a light source (17) adapted to emit a light beam;
a signal receiver.(19) adapted to receive said light beam; and
a pivotable interface (13); and
a probe tip (11) comprising:
a first end (16) connected to said probe (15) body via said pivotable interface (13);
a second end (14) adapted to be displaced from a neutral position; and
a means (27) for reflecting said light beam attached to said first end (16) adapted to reflect said emitted light beam to said signal receiver (19);
centering said probe tip (11) to a neutral position;
emitting said light beam from said light source (17);
reflecting said light beam off of said means (27) for reflecting said light beam;
receiving said reflected light beam with said signal receiver (19) and producing a signal indicative of an intensity of said reflected light beam;
moving said probe tip (11) into contact with said surface (22); and
analyzing said signal to determine contact between said probe tip (11) and said surface (22).

10. The method of optically triggering a probe of claim 9, wherein said analyzing said signal comprises the additional steps of:
comparing said intensity of said signal to a predetermined threshold value; and
determining a contact status of said probe tip (11)
when said intensity of said signal is less than said predetermined threshold value.

11. The method of optically triggering a probe of claim 9 or 10, comprising the
additional steps of:
applying a grid to a surface of said means for reflecting (27);
monitoring said intensity of said reflected light beam to detect a reflection of said light beam off of said grid; and
computing an angle of probe tip deflection from said detection of said reflection of said light beam off said grid.
